# EUROPEAN PATENT SPECIFICATION

(11) **EP 4 120 260 B1**
(45) Date of publication and mention of the grant of the patent: **05.03.2025**
(21) Application number: 22183438.5
(22) Date of filing: 06.07.2022
(51) Int. Cl.: G10L 21/02, H04R 1/40, H04R 3/04, G10L 21/0216

(54) **IN-VEHICLE COMMUNICATION SUPPORT SYSTEM**
FAHRZEUGINTERNES KOMMUNIKATIONSUNTERSTÜTZUNGSSYSTEM
SYSTÈME EMBARQUÉ DE SUPPORT DE COMMUNICATION

(30) Priority: 14.07.2021 JP 2021116442
(43) Date of publication of application: 18.01.2023
(73) Proprietor: Alps Alpine Co., Ltd., Ota-ku, Tokyo 145-8501 (JP)
(72) Inventor: Tachi, Ryosuke, Iwaki-city Fukushima (JP); Taguchi, Hiroyuki, Iwaki-city Fukushima (JP)
(74) Representative: Schmitt-Nilson Schraud Waibel Wohlfrom Patentanwälte Partnerschaft mbB

(56) References cited:
- WO-A1-02/32356
- JP-A- 2002 051 392
- US-A1- 2011 051 951
- US-A1- 2017 193 976
- US-A1- 2017 251 304
- US-A1- 2020 020 315

## Description

The present invention relates to a technology for supporting communication by speech in a vehicle.

As a technique for supporting communication by speech in a vehicle, there is known a technique of collecting a speech voice of a user seated in a first seat of an automobile with a microphone, synthesizing the speech voice having a gain adjusted so that a user in a second seat can clearly hear the speech voice with an output sound such as music output from an audio device, and outputting a synthesized sound from a speaker (for example, JP 2002-51392 A).

Further, there is also known a technique of a microphone array that causes a plurality of microphones to function as a high-directivity microphone by synthesizing outputs of the plurality of microphones by adjusting delay times so that phases of a target sound match, to improve an SN ratio of the target sound (for example, JP 11-234790 A).

Further, there is also known a technique for converting a target sound collected by a microphone disposed at a first position into the target sound to be collected when a microphone is disposed at a second position, using a filter (for example, JP 2001-142469 A).

Here, in this technique, the microphone is actually disposed at the second position in advance, and a transfer function that minimizes a difference between an output of the microphone disposed at the first position and an output of the microphone disposed at the second position is obtained using an adaptive filter and set as the transfer function of the filter.

According to the above-described technique for supporting communication by speech in a vehicle, when the output sound of the audio device output from the speaker is collected and is mixed with the output of the microphone, the SN ratio of the speech voice of the user in the first seat decreases, and it becomes difficult for the user in the second seat to hear the speech voice. Further, since a delayed sound of the output sound of the audio device that has flown into the microphone is output from the speaker, reverberation increases and the entire interior of the vehicle has saturated audibility.

Such a problem can be alleviated by collecting the speech voice of the user in the first seat with a good SN ratio using a high-directivity microphone.

However, since the high-directivity microphone generally has a relatively large and unique shape, problems arise in terms of design limitation and incorporation into an automobile. Meanwhile, implementing the high-directivity microphone using the microphone array is not efficient because the cost increases due to an increase in the number of microphones and a processing load increases.

US 2017/193976 A1 discloses a system which includes a feedback filter configured to receive an audio signal from a microphone and to process the audio signal based on a feedback path between a loudspeaker and the microphone. The system also includes an adaptive filter coupled to the feedback filter. The system further includes a signal combiner coupled to the microphone and to the adaptive filter.

WO 02/32356 A1 discloses an automatic gain control for a cabin communication system which improves the clarity of a voice spoken within a movable interior cabin having ambient noise, the ambient noise intermittently including an undesirable transient noise.

US 2017/251304 A1 discloses a communication system for multiple acoustic zones which supports communication paths within an environment by receiving speech signals of a speaker and playing it back for one or more listeners. Signal processing tasks are split into a microphone related part and into a loudspeaker related part. A sound processing system suitable for use in an environment having multiple acoustic zones includes a plurality of microphone communication instances coupled and a plurality of loudspeaker instances.

US 2011/051951 A1 discloses a calibrated dual omnidirectional microphone array (DOMA) by which microphones comprising a mechanical filter can be accurately calibrated to each other in both amplitude and phase.

Therefore, an object of the present invention is to improve the SN ratio of a speech voice to be output from a speaker with a relatively efficient configuration in an in-vehicle communication support system that collects a speech voice of a user with a microphone and outputs the speech voice from the speaker to other users.

The invention relates to an in-vehicle communication support system and a method of operating such system according to the appended claims. Embodiments are disclosed in the dependent claims.

According to an aspect, the present invention provides an in-vehicle communication support system mounted on an automobile having a first seat and a second seat that are seats arranged right and left and a third seat that is a seat arranged, in a front-rear direction, with the first seat and the second seat, with a first microphone that is a microphone disposed in proximity to the first seat, a second microphone that is a microphone disposed in proximity to the second seat, a speaker configured to output sound toward the third seat, and a signal processing unit configured to generate a speech voice of a user in the first seat and a speech voice of a user in the second seat to be output to the speaker by using an output of the first microphone and an output of the second microphone. Here, the signal processing unit includes, assuming that a voice having a sound source position at a speech position of a user in the first seat is a first seat voice, a first filter configured to convert the first seat voice collected by the second microphone into the first seat voice collected by a first seat virtual microphone that is a virtual microphone located at a position closer to the first seat than the second microphone, and outputs the first seat voice, and generates an output of a virtual microphone array including the first microphone and the first seat virtual microphone and having higher directivity to the speech position of the user in the first seat as compared with the first microphone, as the speech voice of the user in the first seat to be output to the speaker by using the output of the first microphone and an output of the first filter.

Furthermore, according to another aspect, the present invention provides, in an in-vehicle communication support system mounted on an automobile having a first seat and a second seat that are seats arranged right and left and a third seat that is a seat arranged, in a front-rear direction, rear of the first seat and the second seat, a first microphone that is a microphone disposed in proximity to the first seat, a second microphone that is a microphone disposed in proximity to the second seat, a speaker configured to output sound toward the third seat, and a signal processing unit configured to generate a speech voice of a user in the first seat and a speech voice of a user in the second seat to be output to the speaker by using an output of the first microphone and an output of the second microphone. Here, the signal processing unit includes, assuming that a voice having a sound source position at a speech position of a user in the first seat is a first seat voice, a first filter configured to convert the first seat voice collected by the second microphone into the first seat voice collected by a first seat virtual microphone that is a virtual microphone located at a position closer to the first seat than the second microphone, and outputs the first seat voice, a second filter configured to extract and output a component of the first seat voice from an output of the first filter, a delay unit configured to delay and output the output of the first microphone, a third filter configured to extract and output a component of the first seat voice from an output of the delay unit, and an addition unit configured to add an output of the second filter and an output of the third filter to generate the speech voice of the user in the first seat to be output to the speaker, and the delay unit delays the output of the first microphone such that delay times of the component of the first seat voice output from the second filter and the component of the first seat voice output from the third filter match.

Here, for example, a transfer function of the first filter may be set in advance, by causing a third microphone that is a microphone disposed at a position of the first seat virtual microphone to collect a predetermined tuning sound while outputting the predetermined tuning sound from the speech position of the user in the first seat, causing a first adaptive filter to perform an adaptive operation with a difference between an output of the first adaptive filter having the output of the second microphone as an input and an output of the third microphone delayed by a predetermined time as an error, and setting a transfer function of the converged first adaptive filter as the transfer function of the first filter.

Further, for example, a transfer function of the second filter and a transfer function of the third filter may be set in advance, by causing a second adaptive filter to perform an adaptive operation with a difference between an output of the second adaptive filter having the output of the first filter as an input and an output of the first microphone delayed by a predetermined time as an error while outputting a predetermined tuning sound from the speech position of the user in the first seat, and setting a transfer function of the converged second adaptive filter as the transfer function of the second filter, and by causing a third adaptive filter to perform an adaptive operation with a difference between an output of the third adaptive filter having the output of the first microphone delayed by the predetermined time as an input and the output of the first filter as an error while outputting the predetermined tuning sound from the speech position of the user in the first seat, and setting a transfer function of the converged third adaptive filter as the transfer function of the third filter.

Further, the above in-vehicle communication support system may have the first microphone disposed at a position away from a center in a right-left direction of the first seat by a predetermined distance in a direction opposite to the second seat, and may have the position of the first seat virtual microphone be a position away from the center in the right-left direction of the first seat in a direction of the second seat by the predetermined distance.

Further, the in-vehicle communication support system may further include an audio device that outputs a sound of audio content toward the third seat.

According to such an in-vehicle communication support system, it is possible to increase the directivity in the speech position direction of the user in the first seat and to improve an SN ratio of the speech voice of the user in the first seat to be output from the speaker with the efficient configuration using the second microphone provided at the second seat without adding a microphone to the first seat. Further, since the transfer function of each filter of the signal processing unit is fixed, it is also possible to suppress an increase in processing load.

As described above, according to the present invention, it is possible to improve the SN ratio of the speech voice to be output from the speaker with the relatively efficient configuration in the in-vehicle communication support system that collects the speech voice of the user with the microphone and outputs the voice from the speaker to other users.

Fig. 1 is a block diagram illustrating a configuration of an in-vehicle communication support system according to an embodiment of the invention.
Fig. 2A1 is a diagram illustrating an arrangement of a speaker and a microphone of the in-vehicle communication support system according to an embodiment of the invention.

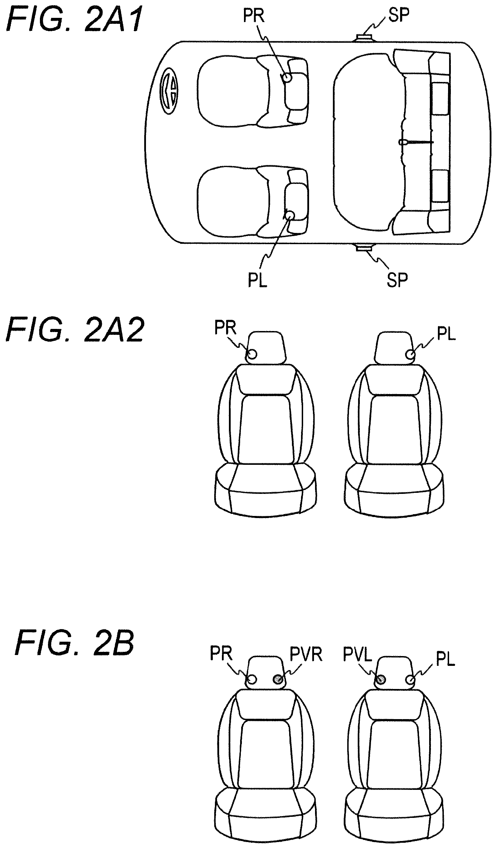

Fig. 2A2 is a diagram illustrating an arrangement of a speaker and a microphone of the in-vehicle communication support system according to an embodiment of the invention.
Fig. 2B is a diagram illustrating an arrangement of a speaker and a microphone of the in-vehicle communication support system according to an embodiment of the invention.

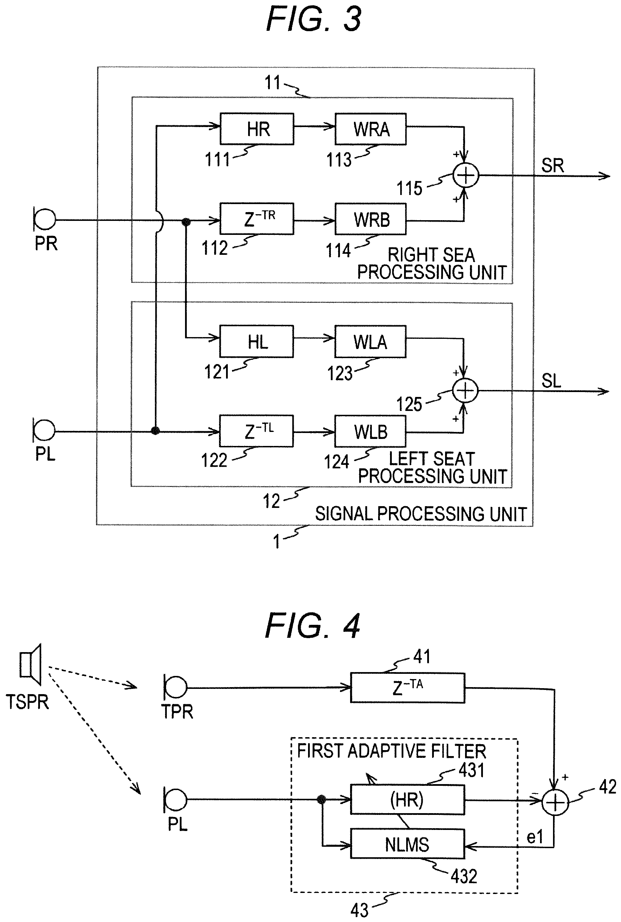

Fig. 3 is a block diagram illustrating a configuration of a signal processing unit according to an embodiment of the present invention.
Fig. 4 is a block diagram illustrating a configuration of tuning in a first stage according to an embodiment of the present invention.

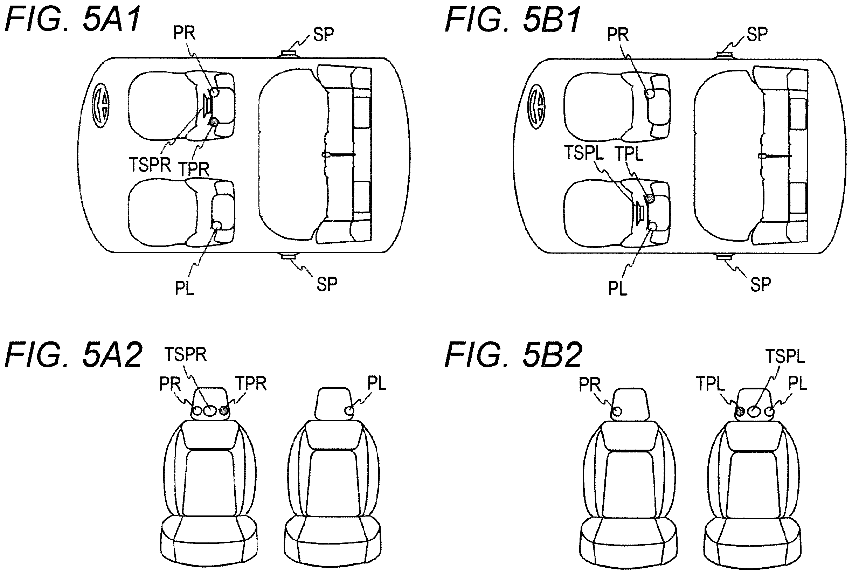

Fig. 5A1 and 5A2 is a diagram illustrating an arrangement of a learning microphone and a learning speaker according to an embodiment of the present invention.
Fig. 5B1 and 5B2 is a diagram illustrating an arrangement of a learning microphone and a learning speaker according to an embodiment of the present invention.

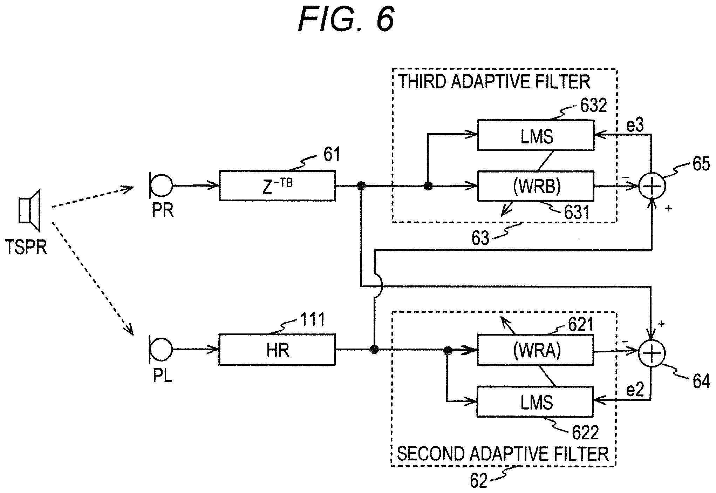

Fig. 6 is a block diagram illustrating a configuration of tuning in a second stage according to an embodiment of the present invention.

Hereinafter, embodiments of the invention will be described.

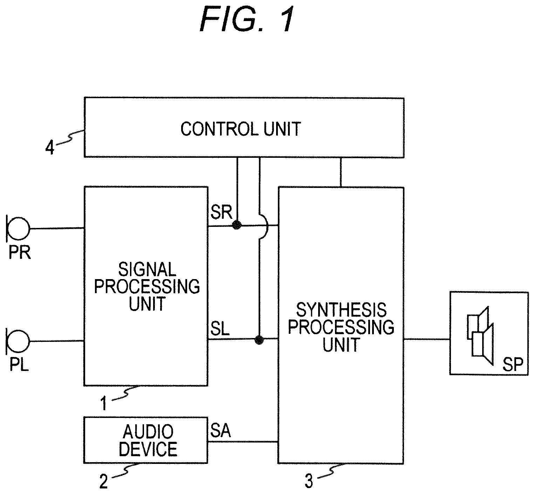

Fig. 1 illustrates a configuration of an in-vehicle communication support system according to a present embodiment.

The in-vehicle communication support system is a system mounted on an automobile, and includes a right front seat microphone PR, a left front seat microphone PL, a signal processing unit 1, an audio device 2, a synthesis processing unit 3, a control unit 4, and a speaker SP as illustrated in the drawing.

As illustrated in Figs. 2A1 and 2A2, the right front seat microphone PR is disposed on a right side of a headrest in a right front seat of the automobile so as to collect a speech voice of a user seated in the right front seat, and the left front seat microphone PL is disposed on a left side of a headrest in a left front seat of the automobile so as to collect a speech voice of a user seated in the left front seat.

Further, the speaker SP is disposed in proximity to a rear seat so as to emit sound toward a user seated in the rear seat.

The signal processing unit 1 generates a right front seat speech voice signal SR representing the speech voice of the user in the right front seat with a higher SN ratio than the right front seat microphone PR and a left front seat speech voice signal SL representing the speech voice of the user in the left front seat with a higher SN ratio than the left front seat microphone PL from an output of the right front seat microphone PR and an output of the left front seat microphone PL, and outputs the generated signals to the synthesis processing unit 3.

The synthesis processing unit 3 synthesizes the right front seat speech voice signal SR, the left front seat speech voice signal SL, and an output sound signal SA representing music or the like output from the audio device 2 under the control of the control unit 4, and outputs a synthesized signal from the speaker SP.

The control unit 4 monitors the presence or absence of a speech of the user in the right front seat and the presence or absence of a speech of the user in the left front seat from the right front seat speech voice signal SR and the left front seat speech voice signal SL.

Then, the control unit 4 controls the synthesis processing unit 3 to synthesize the right front seat speech voice signal SR with the output sound signal SA with a predetermined gain and output the synthesized signal to the speaker SP while the user in the right front seat is speaking, and controls the synthesis processing unit 3 to mute the right front seat speech voice signal SR and not to synthesize the right front seat speech voice signal SR with the output sound signal SA when the user in the right front seat is not speaking. Then, the control unit 4 controls the synthesis processing unit 3 to synthesize the left front seat speech voice signal SL with the output sound signal SA with a predetermined gain and output the synthesized signal to the speaker SP while the user in the left front seat is speaking, and controls the synthesis processing unit 3 to mute the left front seat speech voice signal SL and not to synthesize the left front seat speech voice signal SL with the output sound signal SA when the user in the left front seat is not speaking.

Here, when the user in the right front seat or the user in the left front seat is speaking, the control unit 4 may perform control to cause the synthesis processing unit 3 to decrease the gain of the output sound signal SA.

Next, Fig. 3 illustrates the configuration of the signal processing unit 1.

As illustrated in the drawing, the signal processing unit 1 includes a right seat processing unit 11 that generates the right front seat speech voice signal SR from the output of the right front seat microphone PR and the output of the left front seat microphone PL, and a left seat processing unit 12 that generates the left front seat speech voice signal SL from the output of the left front seat microphone PL and the output of the right front seat microphone PR.

The right seat processing unit 11 includes, assuming that the voice generated at a speech position of the user in the right front seat is a right front seat voice, a filter HR 111 that converts the right front seat voice being output from the left front seat microphone PL into the right front seat voice collected by a right seat virtual microphone PVR that is a virtual microphone located on the left side of the headrest of the right front seat as illustrated in Fig. 2B, a delay unit Z^{-TR} 112 configured to delay and output the output from the right front seat microphone PR to match a delay time of the right front seat voice being output with a delay time of the right front seat voice being output from the filter HR 111, a filter WRA 113 that extracts the right front seat voice being output from the filter HR 111, a filter WRB 114 that extracts the right front seat voice being output from the delay unit Z^{-TR} 112, and a right adder 115 that adds outputs of the filter WRA 113 and the filter WRB 114 and outputs an added output as the right front seat speech voice signal SR.

Here, by the addition of the right adder 115, the right front seat voice being output from the right front seat microphone PR and the right front seat voice collected by the right front seat virtual microphone PVR located at the position different from the right front seat microphone PR are added, and other voice components are offset. Therefore, a virtual microphone array with enhanced directivity toward a speech position direction of the user in the right front seat, using the right front seat microphone PR and the right seat virtual microphone PVR, is formed, and the right front seat speech voice signal SR with an improved SN ratio of the right front seat voice as compared with the output of the right front seat microphone PR, which is output by the virtual microphone array, is output from the speaker.

Similarly, the left seat processing unit 12 includes, assuming that the voice generated at a speech position of the user in the left front seat is a left front seat voice, a filter HL 121 that converts the left front seat voice being output from the right front seat microphone PR into the left front seat voice collected by a left seat virtual microphone PVL that is a virtual microphone located on the right side of the headrest of the left front seat as illustrated in Fig. 2B, a delay unit Z^{-TL} 122 configured to delay and output the output from the left front seat microphone PL to match a delay time of the left front seat voice being output with a delay time of the left front seat voice being output from the filter HL 121, a filter WLA 123 that extracts the left front seat voice being output from the filter HL 121, a filter WLB 124 that extracts the left front seat voice being output from the delay unit Z^{-TL} 122, and a left adder 125 that adds outputs of the filter WLA 123 and the filter WLB 124 and outputs an added output as the left front seat speech voice signal SL.

Here, by the addition of the left adder 125, the left front seat voice being output from the left front seat microphone PL and the left front seat voice collected by the left front seat virtual microphone PVL located at the position different from the left front seat microphone PL are added, and other voice components are offset. Therefore, a virtual microphone array with enhanced directivity toward a speech position direction of the user in the left front seat, using the left front seat microphone PL and the left seat virtual microphone PVL, is formed, and the left front seat speech voice signal SL having an improved SN ratio of the left front seat voice as compared with that of the output of the left front seat microphone PL, which is output by the virtual microphone array, is output from the speaker.

Here, setting of transfer functions (filter coefficients) of the filter HR 111, the filter WRA 113, and the filter WRB 114 of the right seat processing unit 11 is performed by performing, in advance, tuning in a first stage for calculating the transfer function of the filter HR 111 and tuning in a second stage for calculating the transfer functions of the filter WRA 113 and the filter WRB 114, and setting the calculated transfer functions to the filter HR 111, the filter WRA 113, and the filter WRB 114.

The tuning in the first stage is performed with the configuration illustrated in Fig. 4.

As illustrated in the drawing, this configuration includes a right front seat speaker TSPR, a right front seat learning microphone TPR, the left front seat microphone PL, a first delay unit Z^{-TA} 41, a first adder 42, and a first adaptive filter 43. Further, the first adaptive filter 43 includes a first variable filter 431 and a first adaptive algorithm execution unit 432 that updates a transfer function (filter coefficient) of the first variable filter 431 by an adaptive algorithm such as NLMS.

As illustrated in Figs. 5A1 and 5A2, the right front seat speaker TSPR is a speaker disposed at the speech position of the user in the right front seat, and the right front seat learning microphone TPR is a microphone disposed on the left side of the headrest of the right front seat, that is, at the position of the right seat virtual microphone PVR.

The tuning in the first stage is performed while predetermined tuning voice is output from the right front seat speaker TSPR.

The voice collected by the left front seat microphone PL is output to the first adder 42 through the first variable filter 431 of the first adaptive filter 43. The first delay unit Z^{-TA} 41 delays and outputs the voice collected by the right front seat learning microphone TPR, and matches the delay time of the tuning voice being output with the delay time of the tuning voice being output by the left front seat microphone PL.

The first adder 42 subtracts the output of the first variable filter 431 from the output of the first delay unit Z^{-TA} 41 and outputs a result as an error e1 to the first adaptive algorithm execution unit 432 of the first adaptive filter 43.

The first adaptive algorithm execution unit 432 executes the adaptive algorithm such as NLMS and updates the transfer function of the first variable filter 431 so as to minimize the error e1.

Then, it waits until the transfer function of the first variable filter 431 converges by the above operation. When the transfer function of the first variable filter 431 has converged, the transfer function becomes a function that converts the voice having the speech position of the user in the right front seat collected by the left front seat microphone PL as a sound source position into a voice having a correlation as strong as possible (as approximate as possible) with the voice having the speech position of the user in the right front seat collected by the right front seat learning microphone TPR as a sound source position, that is, a function that converts the voice having the speech position of the user in the right front seat being output from the left front seat microphone PL as the sound source position into a voice having the speech position of the user in the right front seat collected by the right seat virtual microphone PVL as the sound source position. Therefore, the converged transfer function of the variable filter is set as the transfer function of the filter HR 111.

Next, the tuning in the first stage is performed with the configuration illustrated in Fig. 6.

As illustrated in the drawing, this configuration includes the right front seat speaker TSPR, the left front seat microphone PL, the right front seat microphone PR, the filter HR 111 for which the transfer function obtained in the tuning in the second stage is set, a second delay unit Z^{-TB} 61, a second adaptive filter 62, a third adaptive filter 63, a second adder 64, and a third adder 65.

Further, the second adaptive filter 62 includes a second variable filter 621 and a second adaptive algorithm execution unit 622 that updates a transfer function (filter coefficient) of the second variable filter 621 by an adaptive algorithm such as LMS, and the third adaptive filter 63 includes a third variable filter 631 and a third adaptive algorithm execution unit 632 that updates a transfer function (filter coefficient) of the third variable filter 631 by an adaptive algorithm such as LMS.

The tuning in the second stage is performed while predetermined tuning voice is output from the right front seat speaker TSPR.

The voice collected by the left front seat microphone PL is output to the second adder 64 through the filter HR 111 and the second variable filter 621 of the second adaptive filter 62. The second delay unit Z^{-TB} 61 delays and outputs the voice collected by the right front seat microphone PR, and matches the delay time of the tuning voice being output with the delay time of the tuning voice being output by the left front seat microphone PL. Then, the output of the second delay unit Z^{-TB} 61 is output to the third adder 65 through the third variable filter 631 of the third adaptive filter 63.

The second adder 64 subtracts the output of the second variable filter 621 from the output of the first delay unit Z^{-TB} and outputs a result as an error e2 to the second adaptive algorithm execution unit 622 of the second adaptive filter 62.

The second adaptive algorithm execution unit 622 executes the adaptive algorithm such as LMS and updates the transfer function of the second variable filter 621 so as to minimize the error e2.

The third adder 65 subtracts the output of the third variable filter 631 from the output of the filter HR 111 and outputs a result as an error e3 to the third adaptive algorithm execution unit 632 of the third adaptive filter 63.

The third adaptive algorithm execution unit 632 executes the adaptive algorithm such as LMS and updates the transfer function of the third variable filter 631 so as to minimize the error e3.

Then, after the convergence of the transfer function of the second variable filter 621 and the transfer function of the third variable filter 631 by the above operation, the converged transfer function of the second variable filter 621 is set as the transfer function of the filter WRA 113, and the converged transfer function of the third variable filter 631 is set as the transfer function of the filter WRB 114.

Here, in the state where the transfer function of the second variable filter 621 and the transfer function of the third variable filter 631 converge, the transfer function of the second variable filter 621 is a function that extracts a component most correlated with the voice collected by the right front seat microphone PR from the voice collected by the right seat virtual microphone PVL, the transfer function of the third variable filter 631 is a function that extracts a component most correlated with the voice collected by the right seat virtual microphone PVL from the voice collected by the right front seat microphone PR, and the most correlated components are components of a tuning voice having the speech position of the user in the right front seat as the sound source position. Therefore, the transfer function of the second variable filter 621 is a transfer function that extracts voice having the speech position of the user in the right front seat as the sound source position from the voice collected by the right seat virtual microphone PVL and the transfer function of the third variable filter 631 is a transfer function that extracts the voice having the speech position of the user in the right front seat as the sound source position from the sound collected by the right front seat microphone PR.

Next, setting of the transfer functions (filter coefficients) of the filter HL 121, the filter WLA 123, and the filter WLB 124 in the left seat processing unit is similarly performed by performing, in advance, tuning in the first stage for calculating the transfer function of the filter HL 121 and tuning in the second stage for calculating the transfer functions of the filter WLA 123 and the filter WLB 124, and setting the calculated transfer functions to the filter HL 121, the filter WLA 123, and the filter WLB 124.

The content of the tuning in the first stage and the tuning in the second stage for calculating the transfer function of each filter of the left seat processing unit 12 is obtained by replacing "left" with "right" and replacing "R" with "L" in the description of the tuning in the first stage and the tuning in the second stage for calculating the transfer function of each filter of the above-described right seat processing unit 11. Therefore, as illustrated in Figs. 5B1 and 5B2, a left front seat speaker TSPL used in the calculation of the transfer functions of the filter HL 121, the filter WLA 123, and the filter WLB 124 of the left seat processing unit 12 is a speaker disposed at the speech position of the user in the left front seat, and a left front seat learning microphone TPL is a microphone disposed on the right side of the headrest of the left front seat, that is, at the position of the left seat virtual microphone PVL.

As described above, according to aspects of the invention, it is possible to increase the directivity in the speech position direction of the user at the seat and to improve the SN ratio of the speech voice of the user at the seat output from the speaker with the efficient configuration using the microphone provided at another seat in addition to the microphone at the seat. Further, since the transfer function of each filter of the signal processing unit 1 is fixed, it is also possible to suppress an increase in processing load.

Note that the above in-vehicle communication support system may be provided with another signal processing unit using an adaptive filter such as an echo canceller that cancels a component of a speech voice output to a speaker, the speech voice having been collected by the right front seat microphone PR or the left front seat microphone PL. Even in this case, since the transfer function of each filter of the signal processing unit 1 is fixed, the operation of the another signal processing units does not interfere with the adaptive filter.

### Reference Signs List

- 1: Signal processing unit
- 2: Audio device
- 3: Synthesis processing unit
- 4: Control unit
- 11: Right seat processing unit
- 12: Left seat processing unit
- 41: First delay unit Z^{-TA}
- 42: First adder
- 43: First adaptive filter
- 61: Second delay unit Z^{-TB}
- 62: Second adaptive filter
- 63: Third adaptive filter
- 64: Second adder
- 65: Third adder
- 111: Filter HR
- 112: Delay unit Z^{-TR}
- 113: Filter WRA
- 114: Filter WRB
- 115: Right adder
- 121: Filter HL
- 122: Delay unit Z^{-TL}
- 123: Filter WLA
- 124: Filter WLB
- 125: Left adder
- 431: First variable filter
- 432: First adaptive algorithm execution unit
- 621: Second variable filter
- 622: Second adaptive algorithm execution unit
- 631: Third variable filter
- 632: Third adaptive algorithm execution unit
- PR: Right front seat microphone
- PL: Left front seat microphone
- SP: Speaker
- TPR: Right front seat learning microphone
- TPL: Left front seat learning microphone
- TSPL: Left front seat speaker

## Claims

1. An in-vehicle communication support system mounted on an automobile having a first seat and a second seat that are seats arranged right and left in a front direction of the automobile and a third seat that is a seat arranged, in a front-rear direction, rear of the first seat and the second seat, wherein the in-vehicle communication support system comprises:
a first microphone (PR) that is a microphone disposed in proximity to the first seat;
a second microphone (PL) that is a microphone disposed in proximity to the second seat;
a speaker (SP) configured to output sound toward the third seat; **characterized by**
a signal processing unit (1) configured to generate a speech voice of a user in the first seat and a speech voice of a user in the second seat to be output to the speaker (SP) by using an output of the first microphone (PR) and an output of the second microphone (PL), wherein
the signal processing unit (1) includes, assuming that a voice having a sound source position at a speech position of the user in the first seat is a first seat voice,
a first filter (111) configured to convert the first seat voice collected by the second microphone (PL) into the first seat voice collected by a first seat virtual microphone that is a virtual microphone located at a position closer to the first seat than the second microphone (PL), and outputs the first seat voice,
a second filter (113) configured to extract and output a component of the first seat voice from an output of the first filter (111),
a delay unit (112) configured to delay and output the output of the first microphone (PR),
a third filter (114) configured to extract and output a component of the first seat voice from an output of the delay unit (112), and
an addition unit (115) configured to add an output of the second filter (113) and an output of the third filter (114) to generate the speech voice of the user in the first seat to be output to the speaker (SP), and
the delay unit (112) configured to delay the output of the first microphone (PR) such that delay times of the component of the first seat voice output from the second filter (113) and the component of the first seat voice output from the third filter (114) match.

2. The in-vehicle communication support system according to claim 1, configured to set
a transfer function of the first filter (111) in advance,
in that a third microphone (TPR) that is a microphone disposed at a position of the first seat virtual microphone is caused to collect a predetermined tuning sound while outputting the predetermined tuning sound from the speech position of the user in the first seat, a first adaptive filter (43) is caused to perform an adaptive operation with a difference between an output of the first adaptive filter (43) having the output of the second microphone (PL) as an input and an output of the third microphone (TPR) delayed by a predetermined time as an error, and a transfer function of the converged first adaptive filter (43) is set as the transfer function of the first filter (111).

3. The in-vehicle communication support system according to claim 1 or 2, configured to set
a transfer function of the second filter (113) and a transfer function of the third filter (114) in advance,
in that a second adaptive filter (62) is caused to perform an adaptive operation with a difference between an output of the second adaptive filter (62) having the output of the first filter (111) as an input and an output of the first microphone (PR) delayed by a predetermined time as an error while outputting a predetermined tuning sound from the speech position of the user in the first seat, and a transfer function of the converged second adaptive filter (62) is set as the transfer function of the second filter (113), and in that a third adaptive filter (63) is caused to perform an adaptive operation with a difference between an output of the third adaptive filter (63) having the output of the first microphone (PR) delayed by the predetermined time as an input and the output of the first filter (111) as an error while outputting the predetermined tuning sound from the speech position of the user in the first seat, and a transfer function of the converged third adaptive filter (63) is set as the transfer function of the third filter (114).

4. The in-vehicle communication support system according to claim 1, 2, or 3, wherein
the first microphone (PR) is disposed at a position away from a center in a right-left direction of the first seat by a predetermined distance in a direction opposite to the second seat, and
the position of the first seat virtual microphone is a position away from the center in the right-left direction of the first seat in a direction of the second seat by the predetermined distance.

5. The in-vehicle communication support system according to claim 1, 2, 3, or 4, further comprising:
an audio device (2) configured to output a sound of audio content toward the third seat.

6. A method of operating an in-vehicle communication support system according to claim 1, wherein
a transfer function of the first filter (111) is set in advance,
by causing a third microphone (TPR) that is a microphone disposed at a position of the first seat virtual microphone to collect a predetermined tuning sound while outputting the predetermined tuning sound from the speech position of the user in the first seat, causing a first adaptive filter (43) to perform an adaptive operation with a difference between an output of the first adaptive filter (43) having the output of the second microphone (PL) as an input and an output of the third microphone (TPR) delayed by a predetermined time as an error, and setting a transfer function of the converged first adaptive filter (43) as the transfer function of the first filter (111).

7. The method of claim 6, wherein
a transfer function of the second filter (113) and a transfer function of the third filter (114) are set in advance,
by causing a second adaptive filter (62) to perform an adaptive operation with a difference between an output of the second adaptive filter (62) having the output of the first filter (111) as an input and an output of the first microphone (PR) delayed by a predetermined time as an error while outputting a predetermined tuning sound from the speech position of the user in the first seat, and setting a transfer function of the converged second adaptive filter (62) as the transfer function of the second filter (113), and by causing a third adaptive filter (63) to perform an adaptive operation with a difference between an output of the third adaptive filter (63) having the output of the first microphone (PR) delayed by the predetermined time as an input and the output of the first filter (111) as an error while outputting the predetermined tuning sound from the speech position of the user in the first seat, and setting a transfer function of the converged third adaptive filter (63) as the transfer function of the third filter (114).

## Patentansprüche

1. Fahrzeuginternes Kommunikationsunterstützungssystem, das in einem Auto montiert ist, das einen ersten Sitz und einen zweiten Sitz, die Sitze sind, die in einer Vorwärtsrichtung des Autos rechts und links angeordnet sind, und einen dritten Sitz hat, der ein Sitz ist, der in einer Vorwärts-Rückwärts-Richtung hinter dem ersten Sitz und dem zweiten Sitz angeordnet ist, wobei das fahrzeuginterne Kommunikationsunterstützungssystem aufweist:
ein erstes Mikrofon (PR), das ein Mikrofon ist, das in der Nähe des ersten Sitzes angeordnet ist;
ein zweites Mikrofon (PL), das ein Mikrofon ist, das in der Nähe des zweiten Sitzes angeordnet ist;
einen Lautsprecher (SP), das dazu ausgelegt ist, Ton in Richtung des dritten Sitzes auszugeben;
**gekennzeichnet durch**
eine Signalverarbeitungseinheit (1), die dazu ausgelegt ist, eine Sprechstimme eines Benutzers auf dem ersten Sitz und eine Sprechstimme eines Benutzers auf dem zweiten Sitz, die an den Lautsprecher (SP) auszugeben sind, unter Verwendung einer Ausgabe des ersten Mikrofons (PR) und einer Ausgabe des zweiten Mikrofons (PL) zu erzeugen, wobei
die Signalverarbeitungseinheit (1) in der Annahme, dass eine Stimme mit einer Tonquellenposition an einer Sprechposition des Benutzers auf dem ersten Sitz eine Stimme auf dem ersten Sitz ist, aufweist:
ein erstes Filter (111), das dazu ausgelegt ist, die von dem zweiten Mikrofon (PL) erfasste Stimme auf dem ersten Sitz in die Stimme auf dem ersten Sitz umzuwandeln, die von einem virtuellen Mikrofon des ersten Sitzes erfasst wird, das ein virtuelles Mikrofon ist, das sich an einer Position befindet, die näher an dem ersten Sitz liegt als das zweite Mikrofon (PL), und die Stimme auf dem ersten Sitz ausgibt,
ein zweites Filter (113), das dazu ausgelegt ist, eine Komponente der Stimme auf dem ersten Sitz aus einer Ausgabe des ersten Filters (111) zu extrahieren und auszugeben,
eine Verzögerungseinheit (112), die dazu ausgelegt ist, die Ausgabe des ersten Mikrofons (PR) zu verzögern und auszugeben,
ein drittes Filter (114), das dazu ausgelegt ist, eine Komponente der Stimme auf dem ersten Sitz aus einer Ausgabe der Verzögerungseinheit (112) zu extrahieren und auszugeben, und
eine Additionseinheit (115), die dazu ausgelegt ist, eine Ausgabe des zweiten Filters (113) und eine Ausgabe des dritten Filters (114) zu addieren, um die Sprechstimme des Benutzers auf dem ersten Sitz, die an den Lautsprecher (SP) auszugeben ist, zu erzeugen, und
die Verzögerungseinheit (112), die dazu ausgelegt ist, die Ausgabe des ersten Mikrofons (PR) derart zu verzögern, dass sich Verzögerungszeiten der Komponente der von dem zweiten Filter (113) ausgegebenen Stimme auf dem ersten Sitz und der Komponente der von dem dritten Filter (114) ausgegebenen Stimme auf dem ersten Sitz entsprechen.

2. Fahrzeuginternes Kommunikationsunterstützungssystem nach Anspruch 1, das dazu ausgelegt ist,
eine Übertragungsfunktion des ersten Filters (111) im Voraus einzustellen,
durch Bewirken, dass ein drittes Mikrofon (TPR), das ein Mikrofon ist, das an einer Position des virtuellen Mikrofons des ersten Sitzes angeordnet ist, einen vorbestimmten Abstimmton erfasst, während der vorbestimmte Abstimmton von der Sprachposition des Benutzers auf dem ersten Sitz ausgegeben wird, dass ein erstes adaptives Filter (43) einen adaptiven Vorgang mit einer Differenz zwischen einer Ausgabe des ersten adaptiven Filters (43), das die Ausgabe des zweiten Mikrofons (PL) als eine Eingabe erhält, und einer Ausgabe des dritten Mikrofons (TPR), die um eine vorbestimmte Zeit verzögert ist, als Fehler durchführt, und dass eine Übertragungsfunktion des konvergierten ersten adaptiven Filters (43) als die Übertragungsfunktion des ersten Filters (111) eingestellt wird.

3. Fahrzeuginternes Kommunikationsunterstützungssystem nach Anspruch 1 oder 2, das dazu ausgelegt ist,
eine Übertragungsfunktion des zweiten Filters (113) und eine Übertragungsfunktion des dritten Filters (114) im Voraus einzustellen
durch Bewirken, dass ein zweites adaptives Filter (62) einen adaptiven Vorgang mit einer Differenz zwischen einer Ausgabe des zweiten adaptiven Filters (62), das die Ausgabe des ersten Filters (111) als eine Eingabe erhält, und einer Ausgabe des ersten Mikrofons (PR), die um eine vorbestimmte Zeit verzögert ist, als Fehler durchführt, während ein vorbestimmter Abstimmton von der Sprachposition des Benutzers auf dem ersten Sitz ausgegeben wird, und dass eine Übertragungsfunktion des konvergierten zweiten adaptiven Filters (62) als die Übertragungsfunktion des zweiten Filters (113) eingestellt wird und dass ein drittes adaptives Filter (63) einen adaptiven Vorgang mit einer Differenz zwischen einer Ausgabe des dritten adaptiven Filters (63), das die Ausgabe des ersten Mikrofons (PR), die um die vorbestimmte Zeit verzögert ist, als eine Eingabe erhält, und der Ausgabe des ersten Filters (111) als Fehler durchführt, während der vorbestimmte Abstimmton von der Sprachposition des Benutzers auf dem ersten Sitz ausgegeben wird, und dass eine Übertragungsfunktion des konvergierten dritten adaptiven Filters (63) als die Übertragungsfunktion des dritten Filters (114) eingestellt wird.

4. Fahrzeuginternes Kommunikationsunterstützungssystem nach Anspruch 1, 2 oder 3, wobei
das erste Mikrofon (PR) an einer Position angeordnet ist, die von einer Mitte in einer Rechts-Links-Richtung des ersten Sitzes um einen vorbestimmten Abstand in einer Richtung entgegengesetzt zu dem zweiten Sitz entfernt ist, und
die Position des virtuellen Mikrofons des ersten Sitzes eine Position ist, die von der Mitte in der Rechts-Links-Richtung des ersten Sitzes in einer Richtung des zweiten Sitzes um den vorbestimmten Abstand entfernt ist.

5. Fahrzeuginternes Kommunikationsunterstützungssystem nach Anspruch 1, 2, 3 oder 4, das ferner aufweist:
eine Audiovorrichtung (2), die dazu ausgelegt ist, Töne von Audioinhalten in Richtung des dritten Sitzes auszugeben.

6. Verfahren zum Betreiben eines fahrzeuginternen Kommunikationsunterstützungssystems nach Anspruch 1, wobei
eine Übertragungsfunktion des ersten Filters (111) im Voraus eingestellt wird
durch Bewirken, dass ein drittes Mikrofon (TPR), das ein Mikrofon ist, das an einer Position des virtuellen Mikrofons des ersten Sitzes angeordnet ist, einen vorbestimmten Abstimmton erfasst, während der vorbestimmte Abstimmton von der Sprachposition des Benutzers auf dem ersten Sitz ausgegeben wird, Bewirken, dass ein erstes adaptives Filter (43) einen adaptiven Vorgang mit einer Differenz zwischen einer Ausgabe des ersten adaptiven Filters (43), das die Ausgabe des zweiten Mikrofons (PL) als eine Eingabe erhält, und einer Ausgabe des dritten Mikrofons (TPR), die um eine vorbestimmte Zeit verzögert ist, als Fehler durchführt, und Einstellen einer Übertragungsfunktion des konvergierten ersten adaptiven Filters (43) als die Übertragungsfunktion des ersten Filters (111).

7. Verfahren nach Anspruch 6, wobei
eine Übertragungsfunktion des zweiten Filters (113) und eine Übertragungsfunktion des dritten Filters (114) im Voraus eingestellt werden durch Bewirken, dass ein zweites adaptives Filter (62) einen adaptiven Vorgang mit einer Differenz zwischen einer Ausgabe des zweiten adaptiven Filters (62), das die Ausgabe des ersten Filters (111) als eine Eingabe erhält, und einer Ausgabe des ersten Mikrofons (PR), die um eine vorbestimmte Zeit verzögert ist, als Fehler durchführt, während ein vorbestimmter Abstimmton von der Sprachposition des Benutzers auf dem ersten Sitz ausgegeben wird, und durch Einstellen einer Übertragungsfunktion des konvergierten zweiten adaptiven Filters (62) als die Übertragungsfunktion des zweiten Filters (113) und durch Bewirken, dass ein drittes adaptives Filter (63) einen adaptiven Vorgang mit einer Differenz zwischen einer Ausgabe des dritten adaptiven Filters (63), das die Ausgabe des ersten Mikrofons (PR), die um die vorbestimmte Zeit verzögert ist, als eine Eingabe erhält, und der Ausgabe des ersten Filters (111) als Fehler durchzuführen, während der vorbestimmte Abstimmton von der Sprachposition des Benutzers auf dem ersten Sitz ausgegeben wird, und durch Einstellen einer Übertragungsfunktion des konvergierten dritten adaptiven Filters (63) als die Übertragungsfunktion des dritten Filters (114).

## Revendications

1. Un système d'aide à la communication embarqué monté sur une automobile ayant un premier siège et un deuxième siège qui sont des sièges disposés à droite et à gauche dans une direction avant de l'automobile et un troisième siège qui est un siège disposé, dans une direction avant-arrière, à l'arrière du premier siège et du deuxième siège, dans lequel le système d'aide à la communication embarqué comprend :
un premier microphone (PR) qui est un microphone disposé à proximité du premier siège ;
un second microphone (PL) disposé à proximité du deuxième siège ;
un haut-parleur (SP) configuré pour émettre du son en direction du troisième siège ; **caractérisé par**
une unité de traitement des signaux (1) configurée pour générer une voix vocale d'un utilisateur dans le premier siège et une voix vocale d'un utilisateur dans le deuxième siège à transmettre au haut-parleur (SP) en utilisant une sortie du premier microphone (PR) et une sortie du second microphone (PL), dans lequel
l'unité de traitement des signaux (1) comporte, en supposant qu'une voix ayant une position de source sonore à une position de parole de l'utilisateur dans le premier siège est une voix du premier siège,
un premier filtre (111) configuré pour convertir la voix du premier siège recueillie par le second microphone (PL) en voix du premier siège recueillie par un microphone virtuel du premier siège qui est un microphone virtuel situé à une position plus proche du premier siège que le second microphone (PL), et émet la voix du premier siège,
un deuxième filtre (113) configuré pour extraire et émettre une composante de la voix du premier siège à partir d'une sortie du premier filtre (111),
une unité de retard (112) configurée pour retarder et émettre la sortie du premier microphone (PR),
un troisième filtre (114) configuré pour extraire et émettre une composante de la voix du premier siège à partir d'une sortie de l'unité de retard (112), et
une unité d'addition (115) configurée pour ajouter une sortie du deuxième filtre (113) et une sortie du troisième filtre (114) afin de générer la voix de l'utilisateur du premier siège qui sera transmise au haut-parleur (SP), et
l'unité de retard (112) configurée pour retarder la sortie du premier microphone (PR) de manière à ce que les temps de retard de la composante de la sortie vocale du premier siège provenant du deuxième filtre (113) et de la composante de la sortie vocale du premier siège provenant du troisième filtre (114) correspondent.

2. Le système d'aide à la communication embarqué selon la revendication 1, configuré pour définir
une fonction de transfert du premier filtre (111) à l'avance,
dans lequel un troisième microphone (TPR) qui est un microphone disposé à une position du microphone virtuel du premier siège est amené à recueillir un son de réglage prédéterminé tout en émettant le son de réglage prédéterminé à partir de la position de parole de l'utilisateur dans le premier siège, un premier filtre adaptatif (43) est amené à effectuer une opération adaptative avec une différence entre une sortie du premier filtre adaptatif (43) ayant la sortie du deuxième microphone (PL) comme entrée et une sortie du troisième microphone (TPR) retardée d'un temps prédéterminé comme erreur, et une fonction de transfert du premier filtre adaptatif convergé (43) est définie comme la fonction de transfert du premier filtre (111).

3. Le système d'aide à la communication embarqué selon la revendication 1 ou 2, configuré pour définir
une fonction de transfert du deuxième filtre (113) et une fonction de transfert du troisième filtre (114) à l'avance,
dans lequel un deuxième filtre adaptatif (62) est amené à effectuer une opération adaptative avec une différence entre une sortie du deuxième filtre adaptatif (62) ayant la sortie du premier filtre (111) comme entrée et une sortie du premier microphone (PR) retardée d'un temps prédéterminé comme erreur tout en émettant un son de réglage prédéterminé à partir de la position de parole de l'utilisateur dans le premier siège, et une fonction de transfert du deuxième filtre adaptatif convergé (62) est définie comme la fonction de transfert du deuxième filtre (113), et dans lequel un troisième filtre adaptatif (63) est amené à effectuer une opération adaptative avec une différence entre une sortie du troisième filtre adaptatif (63) ayant la sortie du premier microphone (PR) retardée du temps prédéterminé comme entrée et la sortie du premier filtre (111) comme erreur tout en émettant le son de réglage prédéterminé à partir de la position de parole de l'utilisateur dans le premier siège, et une fonction de transfert du troisième filtre adaptatif convergé (63) est définie comme la fonction de transfert du troisième filtre (114).

4. Le système d'aide à la communication embarqué selon la revendication 1, 2 ou 3, dans lequel
le premier microphone (PR) est disposé à une position éloignée d'un centre dans une direction droite-gauche du premier siège d'une distance prédéterminée dans une direction opposée au deuxième siège, et
la position du microphone virtuel du premier siège est une position éloignée du centre dans la direction droite-gauche du premier siège dans une direction du deuxième siège par la distance prédéterminée.

5. Le système d'aide à la communication embarqué selon la revendication 1, 2, 3 ou 4, comprenant en outre :
un dispositif audio (2) configuré pour émettre un son de contenu audio en direction du troisième siège.

6. Un procédé d'exploitation d'un système d'aide à la communication embarqué selon la revendication 1, dans lequel
une fonction de transfert du premier filtre (111) est définie à l'avance,
en amenant un troisième microphone (TPR) qui est un microphone disposé à une position du microphone virtuel du premier siège à recueillir un son de réglage prédéterminé tout en émettant le son de réglage prédéterminé à partir de la position de parole de l'utilisateur dans le premier siège, en amenant un premier filtre adaptatif (43) à effectuer une opération adaptative avec une différence entre une sortie du premier filtre adaptatif (43) ayant la sortie du deuxième microphone (PL) comme entrée et une sortie du troisième microphone (TPR) retardée d'un temps prédéterminé comme erreur, et en définissant une fonction de transfert du premier filtre adaptatif convergé (43) comme la fonction de transfert du premier filtre (111).

7. Le procédé selon la revendication 6, dans lequel
une fonction de transfert du deuxième filtre (113) et une fonction de transfert du troisième filtre (114) sont définies à l'avance,
en amenant un deuxième filtre adaptatif (62) à effectuer une opération adaptative avec une différence entre une sortie du deuxième filtre adaptatif (62) ayant la sortie du premier filtre (111) comme entrée et une sortie du premier microphone (PR) retardée d'un temps prédéterminé comme erreur tout en émettant un son de réglage prédéterminé à partir de la position de parole de l'utilisateur dans le premier siège, et en définissant une fonction de transfert du deuxième filtre adaptatif convergé (62) comme la fonction de transfert du deuxième filtre (113), et en amenant un troisième filtre adaptatif (63) à effectuer une opération adaptative avec une différence entre une sortie du troisième filtre adaptatif (63) ayant la sortie du premier microphone (PR) retardée du temps prédéterminé comme entrée et la sortie du premier filtre (111) comme erreur tout en émettant le son de réglage prédéterminé à partir de la position de parole de l'utilisateur dans le premier siège, et en définissant une fonction de transfert du troisième filtre adaptatif convergé (63) comme la fonction de transfert du troisième filtre (114).
